# EUROPÄISCHE PATENTSCHRIFT

(11) **EP 2 704 923 B1**
(45) Veröffentlichungstag und Bekanntmachung des Hinweises auf die Patenterteilung: **05.12.2018**
(21) Anmeldenummer: 12735447.0
(22) Anmeldetag: 03.05.2012
(51) Int. Cl.: B60Q 7/00, B60Q 7/02, G09F 21/04

(54) **WARNVORRICHTUNG FÜR KRAFTFAHRZEUGE**
WARNING DEVICE FOR MOTOR VEHICLES
DISPOSITIF AVERTISSEUR POUR VÉHICULES AUTOMOBILES

(30) Priorität: 04.05.2011 DE 202011100260 U
(43) Veröffentlichungstag der Anmeldung: 12.03.2014
(73) Patentinhaber: Gimber, Oliver, 75175 Pforzheim (DE)
(72) Erfinder: Gimber, Oliver, 75175 Pforzheim (DE)
(74) Vertreter: Schön, Thilo
(86) Internationale Anmeldenummer: PCT/EP2012/001892
(87) Internationale Veröffentlichungsnummer: WO 2012/150032

(56) Entgegenhaltungen:
- WO-A1-02/06590
- DE-A1- 2 004 712
- DE-U1-202008 011 609
- FR-A1- 2 349 475
- US-A- 4 443 056
- US-A- 5 224 439
- US-A- 5 226 792
- US-A- 5 398 437
- US-B1- 6 976 786

## Beschreibung

### Technisches Gebiet der Erfindung

Die Erfindung betrifft eine Warnvorrichtung für Kraftfahrzeuge nach dem Oberbegriff des Anspruchs 1.

### Stand der Technik

Die DE 10 2007 048 709 B3 zeigt unter anderem eine Warnvorrichtung mit einem biegeschlaffen Streifen, wobei ein Ende dieses biegeschlaffen Streifens auf einen fest mit der Heckklappe des Kraftfahrzeugs verbundenen Aufroller aufrollbar ist. Im Ruhezustand ist der biegeschlaffe Streifen somit auf den Aufroller aufgerollt und kann im Bedarfsfall mit einem Handgriff in kurzer Zeit in die ausgezogene Warnposition gebracht werden.

Die beschriebene Warnvorrichtung ist für den professionellen Einsatz sehr gut geeignet, es ist jedoch nicht zu erwarten, dass nicht-gewerbliche Nutzer ihr Kraftfahrzeug mit dieser relativ aufwendigen Warnvorrichtung nachrüsten werden.

In der gattungsbildenden US 5,398,437 ist eine Warnvorrichtung für Personenkraftwagen beschrieben. Diese Warnvorrichtung weist ein großflächiges, rechtekkiges, biegeschlaffes Element auf, bei dem sich auf der einen Seite reflektierende und nicht-reflektierende Streifen abwechseln. An den beiden sich gegenüberliegenden längeren Kanten des biegeschlaffen Elementes sich jeweils mehrere kleine, scheibenförmige Magnete angeordnet. Somit kann die Warnvorrichtung über die gesamte Fahrzeugbreite derart angeordnet werden, dass sie den vertikal verlaufenden Abschnitt eines Kofferraumdeckels abdeckt.

Nachteilig an der in der US 5,398,437 beschriebenen Warnvorrichtung ist, dass ihr Einsatzgebiet auf die großflächige Abdeckung eines Kofferraumdeckels limitiert ist und dass sie in einer Notsituation etwas schwierig zu handhaben ist.

### Gegenstand der Erfindung

Hiervon ausgehend stellt sich die vorliegende Erfindung deshalb die Aufgabe, eine gattungsgemäße Warnvorrichtung dahingehend weiterzubilden, dass sie sehr flexibel einsetzbar ist und eine Fehlbenutzung praktisch ausgeschlossen werden kann.

Diese Aufgabe wird durch eine Warnvorrichtung mit den Merkmalen des Anspruchs 1 gelöst.

Die erfindungsgemäße Warnvorrichtung weist ebenfalls ein biegeschlaffes Element auf, welches sich von einem ersten zu einem zweiten Ende erstreckt und welches aus wenigstens zwei Materialien, nämlich einem Material in einer Signalfarbe und einem reflektierenden Material, besteht. Im Gegensatz zur gattungsgemäßen Warnvorrichtung ist das biegeschlaffe Element jedoch streifenförmig ausgebildet und zwar derart, dass die beiden Magnetelemente an den Schmalseiten angeordnet sind. Weiterhin ist wenigstens eines der beiden Magnetelemente so ausgebildet, dass es als Gewicht dienen kann. Somit kann die erfindungsgemäße Warnvorrichtung auf mehrere Arten eingesetzt werden. In einer ersten Benutzungsart hängt ein Ende frei herunter, beispielsweise von einer Heckklappe, so dass die Warnvorrichtung als Heckklappenwarner dient. In einer zweiten Benutzungsart wird die Warnvorrichtung mit beiden Magnetelementen am Fahrzeug befestigt, wodurch es beispielsweise auch möglich wird, die Warnvorrichtung seitlich am Fahrzeug anzubringen, was insbesondere dann sinnvoll sein kann, wenn das Kraftfahrzeug nach einem Unfall oder einem Fahrfehler quer auf der Fahrbahn steht.

Weiterhin ist der biegeschlaffe Streifen zweilagig ausgebildet, was zur Folge hat, dass beide Seiten wenigstens eine Fläche in einer Signalfarbe und wenigstens eine reflektierende Fläche aufweisen. Somit ist sichergestellt, dass der biegeschlaffe Streifen der Warnvorrichtung nicht falsch herum angeordnet werden kann. Dies ist sehr vorteilhaft, da so auch in der Hektik eines Unfalls eine Fehlbenutzung ausgeschlossen ist. Auch ist eine durch Wind bedingte Torsion des biegeschlaffen Streifens bei frei hängender Verwendung unschädlich.

Vorzugsweise ist der Streifen durch Falten eines entsprechenden Ausgangselementes gebildet, wodurch eine sehr rationelle Herstellung möglich wird.

Um ein Verkratzen von Fahrzeugteilen durch die Magnetelemente zu vermeiden, sind diese Bauteile vorzugsweise in Taschen des biegeschlaffen Streifens aufgenommen, welche weiter vorzugsweise durch Umschlagen von Material des biegeschlaffen Streifens und anschließendes Vernähen, Verkleben oder Verschweißen gebildet werden.

Die Erfindung wird nun anhand eines Ausführungsbeispiels näher beschrieben. Hierbei zeigen:

### Kurzbeschreibung der Zeichnungen

- Figur 1: ein Ausgangselement für die Herstellung eines Streifens und zwei Magnetelemente,
- Figur 2: das Ausgangselement aus Figur 1 von der Rückseite und die beiden Magnetelemente, welche auf dem Ausgangselement angeordnet sind,
- Figur 3: das in Figur 2 Gezeigte nach einem Falt- und Nähvorgang,
- Figur 4: eine erste bestimmungsgemäße Benutzung von Warnvorrichtungen bei einer seitlichen Anordnung an einem Kraftfahrzeug und
- Figur 5: eine weitere bestimmungsgemäße Benutzung von Warnvorrichtungen bei einer Anordnung an der Heckklappe eines Kraftfahrzeugs.

### Beschreibung bevorzugter Ausführungsformen

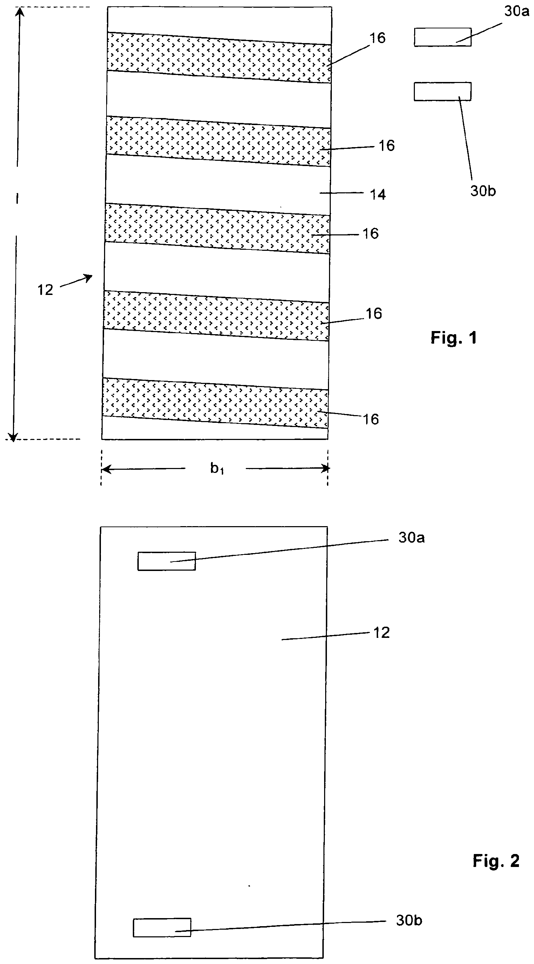

Die Figur 1 zeigt ein Ausgangselement 12 und zwei Magnetelemente 30a,b. Aus diesen drei Elementen wird eine erfindungsgemäße Warnvorrichtung hergestellt. Das Ausgangselement 12 besteht aus einem im Wesentlichen rechteckigen ersten Zuschnitt 14 und mehreren zweiten Zuschnitten 16, welche in einem vorangehenden Arbeitsschritt auf dem ersten Zuschnitt 14 angeordnet, insbesondere vernäht, verklebt oder verschweißt wurden. Das Ausgangselement 12 hat eine Länge I und eine erste Breite b₁, wobei im gezeigten Ausführungsbeispiel die Länge I größer als die erste Breite b₁ ist. Die zweiten Zuschnitte 16 erstrecken sich im Wesentlichen in Richtung der ersten Breite b₁, können hierzu jedoch leicht schräg verlaufen, wie dies auch gezeigt ist. Vorzugsweise besteht der erste Zuschnitt 14 aus einem Material in einer Signalfarbe, beispielsweise hellgelb und die zweiten Zuschnitte 16 bestehen vorzugsweise aus einem reflektierenden Material, wie es beispielsweise auch bei Warnwesten und dergleichen eingesetzt wird. Das Umgekehrte ist im Prinzip ebenso möglich, nämlich derart, dass der erste Zuschnitt 14 aus einem reflektierenden Material besteht und die zweiten Zuschnitte 16 aus einem Material in einer Signalfarbe bestehen. Insbesondere der erste Zuschnitt 14 besteht vorzugsweise aus einem gewobenen Kunststoffmaterial, die zweiten Zuschnitte 16 können ebenfalls gewoben sein, aber auch aus Folie bestehen.

Es sind weiterhin zwei plattenförmige Magnetelemente 30a, b vorgesehen. Die beiden plattenförmigen Gewichte sind vorzugsweise identisch und haben weiter vorzugsweise ein Gewicht zwischen 20 und 100 Gramm, vorzugsweise von ca. 50 Gramm.

In einem ersten Arbeitsschritt werden, wie dies in Figur 2 gezeigt ist, die beiden Magnetelemente 30a, b auf der Rückseite des Ausgangselementes 12 angeordnet. Anschließend wird das Ausgangselement 12 entlang seiner sich in Längsrichtung erstreckenden Mitte umgeschlagen, so dass der so gebildete Streifen eine zweite Breite b₂ aufweist, welche der Hälfte der ersten Breite b₁ entspricht. Der Materialstreifen ist vorzugsweise wenigstens dreimal so lang wie breit. Anschließend werden eine Randnaht 18 und zwei Taschennähte 17a, 17b erzeugt. Die Länge der Magnetelemente entspricht vorzugsweise wenigstens 50 Prozent der Länge der zweiten Breite b₂.

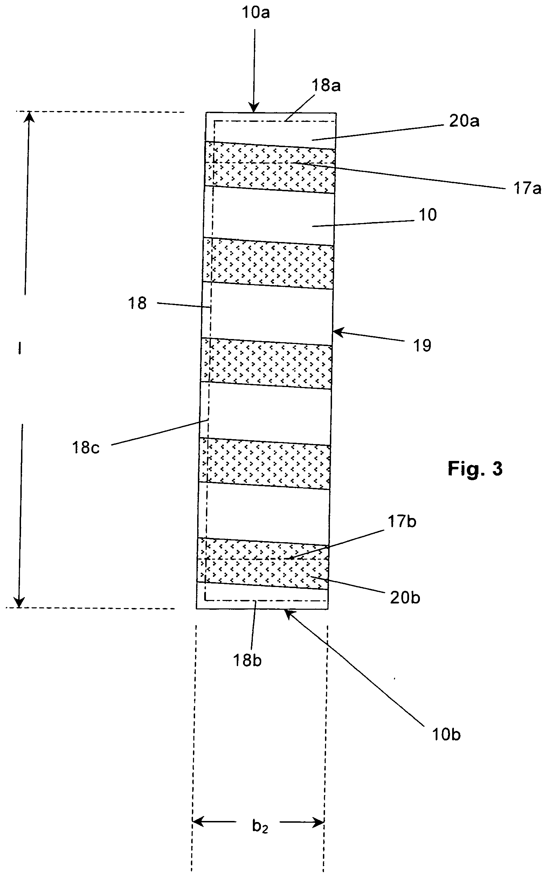

Figur 3 zeigt die fertige Warnvorrichtung nach Abschluss der eben beschriebenen Schritte, wobei die Magnetelemente 30a, 30b nun im Inneren des so gebildeten Streifens 10 liegen und nicht mehr zu sehen sind. Die Randnaht 18 hat zwei Stirnabschnitte 18a und 18b sowie einen Längsabschnitt 18c. Die beiden Taschennähte 17a, 17b erstrecken sich parallel zu den beiden Stirnabschnitten 18a, 18b der Randnaht 18, so dass im Bereich der Enden 10a, 10b des Streifens 10 jeweils eine Tasche 20a,b gebildet ist, in welcher jeweils ein Magnetelement 30a, 30b aufgenommen ist. Diese Taschen 20a, 20b werden jeweils aus einem Abschnitt der Umschlagkante 19, aus einem Abschnitt des Längsabschnittes 18c der Randnaht 18, aus einem Stirnabschnitt 18a, 18b der Randnaht und einer Taschennaht 17a, 17b gebildet. Im Bereich der Randnaht 18 kann ein Saummaterial oder dergleichen vorgesehen sein (nicht dargestellt). Der Streifen 10 ist vollständig zweilagig aufgebaut, so dass beide Oberflächen im Wesentlichen gleich aussehen, nämlich ein Streifenmuster haben, bei dem sich Signalfarbenabschnitte mit reflektierenden Abschnitten abwechseln.

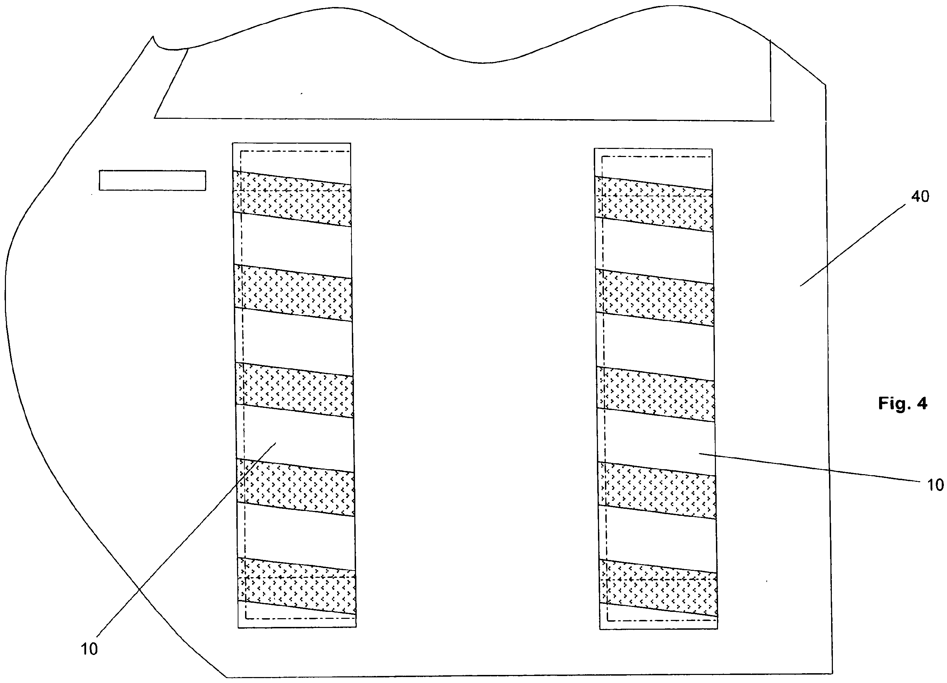

Die erfindungsgemäße Warnvorrichtung kann, wenn sie nicht gebraucht wird, klein zusammengefaltet und in einer kleinen Hülle im Kofferraum aufbewahrt werden. Im Bedarfsfall kann sie nahezu überall am Kraftfahrzeug angebracht werden, beispielsweise auf einer Fahrzeugtür 40, wie dies in Figur 4 gezeigt ist. In diesem Fall halten beide Magnetelemente 30a, 30b den biegeschlaffen Streifen an der Karosserie.

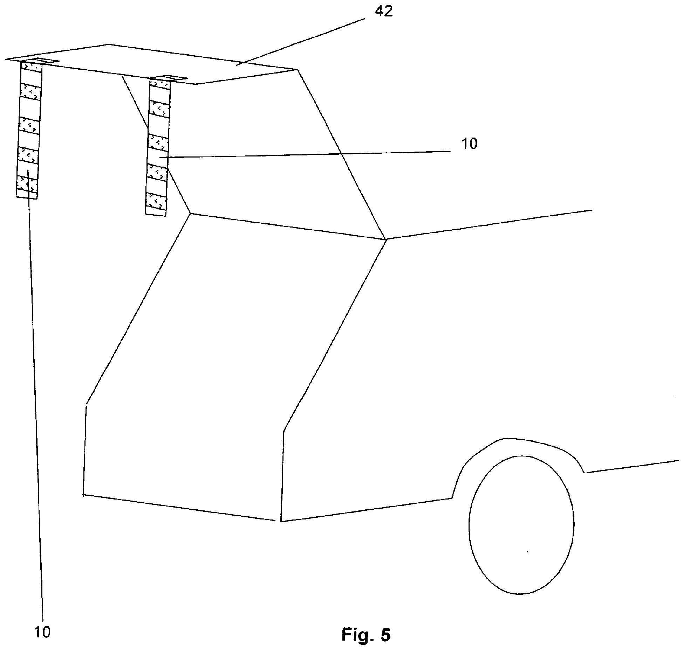

Eine grundsätzlich andere Verwendung zeigt Figur 5. Hier wird ein biegeschlaffer Streifen 10 mit jeweils nur einem Magnetelement an einem Karosserieteil, hier nämlich der Heckklappe 42, gehalten und der Streifen hängt frei herunter. Hierbei dient das jeweils andere Magnetelement als Gewicht, so dass eine im Wesentlichen vertikale Ausrichtung des biegeschlaffen Streifens erreicht wird.

### Bezugszeichenliste

- 10: Streifen
- 10a,b: Ende
- 12: Ausgangselement
- 14: erster Zuschnitt
- 16: zweiter Zuschnitt
- 17a,b: Taschennaht
- 18: Randnaht
- 18a: erster Stirnabschnitt
- 18b: zweiter Stirnabschnitt
- 18c: Längsabschnitt
- 19: Umschlagkante
- 20a,b: Tasche
- 30a,b: Magnetelement
- 40: Fahrzeugtür
- 42: Heckklappe

## Patentansprüche

1. Warnvorrichtung für Kraftfahrzeuge mit
einem sich von einem ersten zu einem zweiten Ende (10a, 10b) erstreckenden, zwei Oberflächen aufweisenden biegeschlaffen Element, welches aus wenigstens zwei Materialien, nämlich einem Material in einer Signalfarbe und einem reflektierenden Material besteht,
wenigstens einem im Bereich des ersten Endes (10a) des biegeschlaffen Elementes angeordneten ersten Magnetelement (30a) und
wenigstens einem im Bereich des zweiten Endes (10b) des biegschlaffen Elementes angeordneten zweiten Magnetelement (30b),
wobei beide Magnetelemente (30a, 30b) jeweils in Taschen des biegeschlaffen Elements aufgenommen und somit dauerhaft mit dem biegeschlaffen Element verbunden sind,
wobei zumindest das zweite Magnetelement (30b) so ausgebildet ist, dass es als Gewicht dienen kann,
**dadurch gekennzeichnet,**
**dass** das biegeschlaffe Element ein Streifen (10) ist und derart ausgebildet ist,
**dass** seine Länge vom ersten Ende zum zweiten Ende wenigstens dreimal so groß ist wie seine Breite, und
**dass** das biegeschlaffe Element derart durchgängig und vollständig zweilagig ausgebildet ist, dass beide Oberflächen beide Materialien aufweisen, so dass beide Oberflächen im Wesentlichen gleich aussehen.

2. Warnvorrichtung nach Anspruch 1, **dadurch gekennzeichnet, dass** der zweilagige biegeschlaffe Streifen durch Falten gebildet wird.

3. Warnvorrichtung nach Anspruch 1 oder Anspruch 2, **dadurch gekennzeichnet, dass** beide Magnetelemente plattenförmig ausgebildet sind und jeweils als Gewicht dienen können.

4. Warnvorrichtung nach Anspruch 2 , **dadurch gekennzeichnet, dass** die Taschen (20a, 20b) durch Umschlagen einer Materiallage und Vernähen, Verkleben oder Verschweißen dieser Materiallage mit einer anderen Materiallage gebildet werden.

5. Warnvorrichtung nach einem der vorangehenden Ansprüche, **dadurch gekennzeichnet, dass** das biegeschlaffe Material des Streifens (10) aus einem ersten Zuschnitt (14) und aus auf diesem ersten Zuschnitt angeordneten zweiten Zuschnitten (16) besteht.

6. Warnvorrichtung nach Anspruch 5, **dadurch gekennzeichnet, dass** einer der beiden Zuschnitte die Signalfarbe aufweist und dass der andere Zuschnitt aus dem reflektierenden Material besteht.

7. Warnvorrichtung nach einem der vorangehenden Ansprüche, **dadurch gekennzeichnet, dass** beide Oberflächen des biegeschlaffen Streifens ein Streifenmuster haben, bei dem sich Signalfarbenabschnitte mit reflektierenden Abschnitten abwechseln.

## Claims

1. Warning device for motor vehicles, comprising
a flexible element having two surfaces and extending from a first end to a second end (10a, 10b), which is made of at least two materials, namely a material in a signal colour and a reflecting material,
at least one first magnet element (30a) arranged in the area of the first end (10a) of the flexible element, and
at least one second magnet element (30b) arranged in the area of the second end (10b) of the flexible element,
wherein both magnet elements (30a, 30b) are in each case accommodated in pockets of the flexible element, and are therefore permanently connected to the flexible element,
wherein at least the second magnet element (30b) is configured in such a way that it can serve as a weight,
**characterised in that**
the flexible element is a strip (10) and is configured in such a way that its length from the first end to the second end is at least three times greater than its width, and
that the flexible element is configured throughout and completely as having two layers in a way that both surfaces comprise both materials, such that both surfaces have essentially the same appearance.

2. Warning device according to claim 1, **characterised in that** the two-layer flexible strip is formed by folding.

3. Warning device according to claim 1 or claim 2, **characterised in that** both magnet elements are configured as plate shaped and in each case can serve as weights.

4. Warning device according to claim 2, **characterised in that** the pockets (20a, 20b) are formed by turning over a material layer and sewing, adhesive bonding, or welding this material layer to the other material layer.

5. Warning device according to any one of the preceding claims, **characterised in that** the flexible material of the strip (10) consists of a first cutting (14) and of second cuttings (16) arranged on this first cutting.

6. Warning device according to claim 5, **characterised in that** one of the two cuttings exhibits the signal colour and that the other cutting consists of the reflecting material.

7. Warning device according to any one of the preceding claims, **characterised in that** both surfaces of the flexible strip have a strip pattern, with which the signal colour sections alternate with reflecting sections.

## Revendications

1. Dispositif avertisseur pour véhicules automobiles comprenant un élément souple en flexion présentant deux surfaces et s'étendant d'une première extrémité à une deuxième extrémité (10a, 10b), ledit élément étant constitué d'au moins deux matériaux, à savoir un matériau dans une couleur de signalisation et un matériau réfléchissant,
au moins un premier élément magnétique (30a) placé dans la zone de la première extrémité (10a) de l'élément souple en flexion et
au moins un deuxième élément magnétique (30b) placé dans la zone de la deuxième extrémité (10b) de l'élément souple en flexion,
les deux éléments magnétiques (30a, 30b) étant reçus respectivement dans des poches de l'élément souple en flexion et ainsi reliés de manière permanente à l'élément souple en flexion,
au moins le deuxième élément magnétique (30b) étant réalisé de manière à pouvoir servir de poids,
**caractérisé en ce que**
l'élément souple en flexion est une bande (10) et est réalisée de manière que sa longueur de la première extrémité à la deuxième extrémité représente au moins trois fois sa largeur, et
**en ce que** l'élément souple en flexion est réalisé en deux couches sur toute son étendue de manière que les deux surfaces présentent les deux matériaux de sorte que les deux surfaces paraissent sensiblement identiques.

2. Dispositif avertisseur selon la revendication 1, **caractérisé en ce que** la bande souple en flexion à deux couches est formée par pliage.

3. Dispositif avertisseur selon la revendication 1 ou la revendication 2, **caractérisé en ce que** les deux éléments magnétiques sont réalisés en forme de plaque et peuvent chacun servir de poids.

4. Dispositif avertisseur selon la revendication 2, **caractérisé en ce que** les poches (20a, 20b) sont formées par rabattement d'une couche de matériau et couture, collage ou soudage de cette couche avec une autre couche de matériau.

5. Dispositif avertisseur selon l'une des revendications précédentes, **caractérisé en ce que** le matériau souple de la bande (10) est constitué d'une première découpe (14) et d'une deuxième découpe (16) placée sur cette première découpe.

6. Dispositif avertisseur selon la revendication 5, **caractérisé en ce qu'**une des deux découpes présente la couleur de signalisation et **en ce que** l'autre découpe est constituée du matériau réfléchissant.

7. Dispositif avertisseur selon l'une des revendications précédentes, **caractérisé en ce que** les deux surfaces de la bande souple présentent un motif à rayures, qui alterne les portions à couleur de signalisation et les portions réfléchissantes.
